# DEMANDE DE BREVET EUROPEEN

(11) **EP 1 396 300 A1**
(43) Date de publication de la demande: **10.03.2004**
(21) Numéro de dépôt: 02405767.1
(22) Date de dépôt: 04.09.2002
(51) Int. Cl.: B23B 13/02

(54) **Procédé de commande d'un dispositif de déplacement en translation de barres**

(71) Demandeur: LNS S.A., 2534 Orvin (CH)
(72) Inventeur: Schärer, Rolf, 2534 Orvin (CH)
(74) Mandataire: BOVARD AG - Patentanwälte

(57) **Abrégé**

L'invention concerne un procédé de commande d'un dispositif (8) de déplacement en translation équipant une installation (1) de chargement séquentiel de barres (2) dans une partie rotative tubulaire (3) d'une machine d'usinage, ce procédé étant caractérisé en ce que:
- pendant au moins un premier cycle d'usinage d'une pièce (20), on détecte, on mesure et on enregistre les déplacements qui sont imposés à la butée (82) du dispositif (8) de translation interne à l'installation (1) de chargement,
- lors d'au moins un cycle d'usinage d'une pièce (20) qui suit le cycle dit d'observation, on exploite l'enregistrement effectué pour commander le dispositif (8) de translation interne à l'installation (1) de chargement et assurer des déplacements de la butée (82) de ce dispositif (8) de translation, en synchronisme avec les déplacements de la poupée mobile (41).

## Description

L'invention se rapporte à un procédé de commande d'un dispositif de déplacement en translation de barres, ce dispositif équipant une installation de chargement séquentiel de telles barres dans une machine d'usinage par tournage.

L'invention se rapporte également à l'installation qui comprend un dispositif de déplacement en translation de barres, commandé selon le procédé précité.

Dans le domaine de la fabrication mécanique, il est connu de produire des pièces sur des machines de tournage automatiques, à partir de barres de matériau, et ce, en procédant à des usinages successifs sur des portions longitudinales de ces barres.

Il est également connu d'utiliser une installation de chargement pour, après épuisement d'une barre par usinage dans une machine d'usinage, placer, puis pousser automatiquement une nouvelle barre dans ladite machine d'usinage.

Les installations de chargement du type précité qui servent au ravitaillement de telles machines automatiques de tournage, utilisées en production industrielle, sont connues sous le nom de « ravitailleurs ».

L'invention intéresse plus particulièrement, mais non exclusivement, un procédé de commande d'un dispositif de déplacement en translation de barres qui est situé dans une installation de chargement de telles barres dans une machine d'usinage du type dit "à poupée mobile".

Une machine d'usinage dite à "poupée mobile" est une machine d'usinage comprenant une partie rotative qui, d'une part, reçoit une partie extrême de la barre et porte une pince de maintien radial de cette partie extrême et, d'autre part, est, pendant l'usinage de la barre et cependant que la pince reste fermée, animée de mouvements de translation sensiblement selon l'axe de cette barre.

Une installation de chargement de barres dans une machine d'usinage à poupée mobile doit donc autoriser de tels mouvements de la barre.

Il s'avère qu'une installation de chargement de barres comprend notamment :
- un premier dispositif destiné à assurer une fonction combinant des actions de soutien et de guidage d'une barre, notamment pendant sa rotation, et ce, au cours d'un déplacement en translation de cette barre selon un axe déterminé, dit axe de guidage, notamment sensiblement coaxial à la partie rotative tubulaire de la machine d'usinage qui doit être traversée par ladite barre, afin d'être présentée à un système d'outils situé dans cette machine,
- un deuxième dispositif destiné à assurer une fonction de stockage d'une pluralité de barres,
- un troisième dispositif destiné à assurer des fonctions de sélection et de prélèvement d'une barre dans ce magasin, puis de placement de cette barre dans le dispositif de guidage en translation,
- un quatrième dispositif, dit dispositif de déplacement en translation, destiné à assurer, par le biais d'au moins une butée maintenue en appui contre la barre, des fonctions de déplacement en translation de cette barre chargée dans le dispositif de guidage et, notamment, de manière à pouvoir assurer sélectivement,
   . le déplacement de cette barre, au moins dans le dispositif de guidage, de manière à la disposer dans une position dite d'attente de chargement,
   . la poussée de la barre, par séquence, à la fois à travers ledit dispositif de guidage et la partie rotative tubulaire de la machine d'usinage, depuis ladite position dite d'attente de chargement jusqu'à ce qu'un nombre déterminé de pièces ait été réalisé,
   . l'extraction de la partie rotative tubulaire d'un tronçon de barre qui n'aurait pas été utilisé dans la machine d'usinage,
   . le déplacement dudit tronçon non utilisé jusqu'à une dernière position, telle celle d'un poste d'évacuation de ce tronçon,
- un cinquième dispositif de commande programmable des dispositifs précités.

Tel que cela a été indiqué plus avant, dans le cas d'une machine à poupée mobile, lors de l'usinage, les mouvements de translation de la poupée mobile induisent le déplacement de la barre, à l'insu du dispositif de déplacement en translation interne à l'installation de chargement.

Lorsque la barre a une section transversale réduite elle est particulièrement sujette au fléchissement, voire au flambage, lors du recul de la poupée.

Les constructeurs d'installations de chargement qui doivent être utilisées pour charger des barres dans des machines d'usinage à poupée mobile ont dû prévoir une solution technique qui autorise des translations de la barre dans l'installation de chargement, sous l'effet des mouvements de la poupée mobile.

Une solution technique connue consiste à, d'une part, constituer une liaison rigide entre la poupée mobile et l'élément actif moteur du dispositif de déplacement en translation interne à l'installation et, d'autre part, à placer cette liaison sous le contrôle d'un moyen de débrayage commandé, de manière telle que seuls les mouvements de recul de la poupée mobile soient transmis au dispositif de déplacement en translation interne à l'installation de chargement.

Il s'avère que le débrayage recherché n'est obtenu qu'après un temps de réaction relativement important, ce qui peut générer des à-coups préjudiciables à la qualité de l'usinage et/ou au fonctionnement des différents mécanismes en jeu, que ce soit dans l'installation de chargement ou dans la machine d'usinage.

Un résultat que l'invention vise à obtenir est un procédé qui permet de remédier à ces inconvénients.

A cet effet, l'invention a pour objet un procédé de commande d'un dispositif de déplacement en translation équipant une installation de chargement séquentiel de barres dans une partie rotative tubulaire d'une machine d'usinage de ces barres, cette machine d'usinage étant destinée à produire, par la répétition d'un cycle d'usinage préétabli, une pluralité de pièces profilées dont la longueur correspond à une fraction de la longueur de la barre,
- la partie rotative tubulaire de la machine d'usinage, d'une part, comprenant une pince de serrage de la barre qui la traverse et, d'autre part, faisant partie d'un ensemble qui, dit poupée mobile, peut, notamment au cours de chaque cycle d'usinage d'une pièce, être déplacé en translation selon un axe sensiblement parallèle à celui de la partie rotative, et ce, d'une part, suivant deux sens opposés, par la mise en fonction d'un moyen moteur prévu sur ladite machine d'usinage et commandé par un appareil à cet effet et, d'autre part, cependant que la pince reste fermée,
- l'installation de chargement de barres comprenant quant à elle au moins un dispositif, dit dispositif de translation, destiné à assurer des fonctions de déplacement en translation d'une barre de manière à pouvoir assurer, par le biais d'au moins une butée maintenue en appui contre cette barre, notamment, la poussée de ladite barre, par séquence, à travers la partie rotative tubulaire, jusqu'à ce qu'un nombre déterminé de pièces ait été réalisé,
ce procédé étant caractérisé en ce que :
- pendant au moins un premier cycle d'usinage d'une pièce, dit cycle d'observation, on détecte, on mesure et on enregistre les déplacements qui sont imposés à la butée du dispositif de translation interne à l'installation de chargement, du fait,
   . de la liaison mécanique établie par la barre entre ladite butée du dispositif de translation interne à l'installation et la poupée mobile qui retient cette barre dans sa pince de serrage et,
   . des déplacements de ladite poupée mobile commandés au cours de l'usinage par son appareil de commande,
- lors d'au moins un cycle d'usinage d'une pièce qui suit le cycle dit d'observation, on exploite l'enregistrement effectué pour commander le dispositif de translation interne à l'installation de chargement et assurer des déplacements de la butée de ce dispositif de translation, en synchronisme avec les déplacements de la poupée mobile.

L'invention a également pour objet une installation de chargement de barres dans une machine d'usinage remarquable en ce qu'elle comprend un dispositif de déplacement en translation de barres qui est commandé selon le procédé précité.

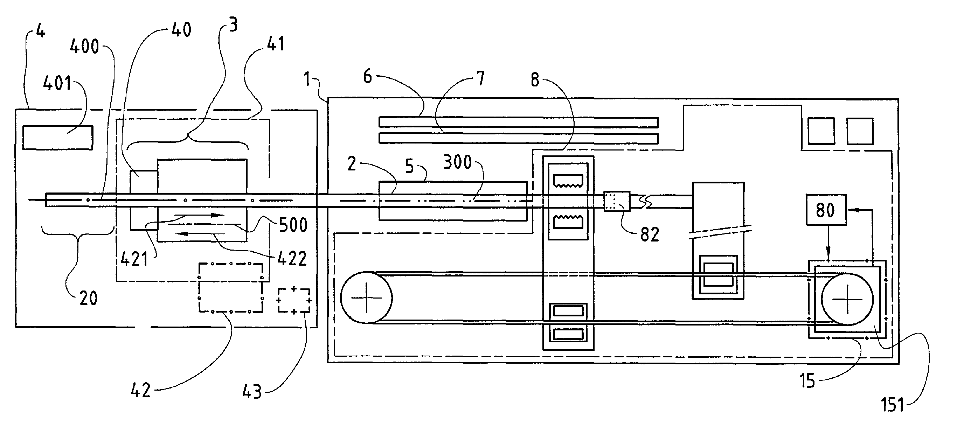

L'invention sera bien comprise à la lecture de la description ci-après faite à titre d'exemple non limitatif, en regard du dessin ci-annexé qui représente très schématiquement et vue de dessus, un ensemble comprenant une machine d'usinage à poupée mobile et une installation de chargement de barres dans cette machine d'usinage.

En se reportant au dessin, on voit une installation 1 de chargement séquentiel de barres 2 de matériau dans une partie rotative tubulaire 3 d'une machine d'usinage 4 de ces barres 2, telle une machine de tournage 4, de manière à produire, par la répétition d'un cycle d'usinage préétabli, une pluralité de pièces 20 profilées dont la longueur correspond à une fraction de la longueur de la barre 2.

Bien que cela n'apparaisse pas de manière flagrante sur le dessin, la partie rotative tubulaire 3 de la machine d'usinage 4, d'une part, comprend une pince 40 de serrage de la barre 2 qui la traverse et, d'autre part, fait partie d'un ensemble 41 qui, dit poupée mobile 41, peut, notamment au cours de chaque cycle d'usinage d'une pièce 20, être déplacé en translation selon un axe 500 sensiblement parallèle à celui 400 de la partie rotative 3, et ce :
- d'une part, suivant deux sens opposés 421, 422, par la mise en fonction d'un moyen moteur 42 prévu sur ladite machine d'usinage 4 et commandé par un appareil 43 de commande à cet effet, et
- d'autre part, cependant que la pince 40 reste fermée.

L'installation 1 de chargement de barres 2 comprend avantageusement, mais non limitativement :
- un premier dispositif 5, dit de guidage en translation, destiné à assurer une fonction combinant des actions de soutien et de guidage d'une barre 2, notamment pendant sa rotation, et ce, au cours d'un déplacement en translation de cette barre 2 selon un axe déterminé 300, dit axe de guidage 300, notamment sensiblement coaxial à celui 400 de la partie rotative tubulaire 3 de la machine d'usinage 4 qui doit être traversée par ladite barre 2, afin d'être présentée à un système d'outils 401 situé dans cette machine 4,
- un deuxième dispositif 6 destiné à assurer une fonction de stockage d'une pluralité de barres 2,
- un troisième dispositif 7 destiné à assurer des fonctions de sélection et de prélèvement d'une barre 2 dans ce dispositif de stockage 6, puis de placement de cette barre 2 dans le dispositif 5 de guidage en translation,
- un quatrième dispositif 8 destiné à assurer des fonctions de déplacement en translation de la barre 2 chargée dans le dispositif 5 de guidage en translation et, notamment, de manière à pouvoir, par le biais d'au moins une butée 82 maintenue en appui contre cette barre 2, obtenir sélectivement,
   . le déplacement de cette barre 2, au moins dans le dispositif 5 de guidage en translation, de manière à la disposer dans une position dite d'attente de chargement,
   . la poussée de la barre 2, par séquence, à la fois à travers ledit dispositif 5 de guidage en translation et la partie rotative tubulaire 3, depuis ladite position dite d'attente de chargement jusqu'à ce qu'un nombre déterminé de pièces ait été réalisé,
   . l'extraction de la partie rotative tubulaire 3 d'un tronçon de barre qui n'aurait pas été utilisé dans la machine d'usinage 4,
   . le déplacement dudit tronçon de barre non utilisé jusqu'à un poste d'évacuation de ce tronçon de barre.

Cette description permet de mieux comprendre qu'une installation 1 de chargement consiste en un ensemble électromécanique complexe dont le fonctionnement est susceptible d'être notablement perturbé, voire altéré, par des actions extérieures, telles les actions de déplacement imposées à la barre 2 par une poupée mobile 41, au cours d'un cycle d'usinage d'une pièce 20.

Par cycle d'usinage, on désigne une succession d'opérations d'usinage qui sont réalisées par des déplacements relatifs entre la barre 2 et au moins un outil d'un système d'outils 401 situé dans la machine 4 d'usinage.

Dans le cas de l'invention, on considèrera que l'installation de chargement comprend, au minimum, au moins un dispositif 8 de translation, destiné à assurer des fonctions de déplacement en translation d'une barre 2 de manière à pouvoir, par le biais d'au moins une butée 82 maintenue en appui contre cette barre 2, obtenir, notamment, la poussée de la barre 2, par séquence, à travers la partie rotative tubulaire 3, jusqu'à ce qu'un nombre déterminé de pièces 20 ait été réalisé.

Tel que cela a été annoncé, l'invention concerne un procédé qui autorise des translations de la barre 2 dans l'installation 1 de chargement, sous l'effet des mouvements de la poupée mobile 41, sans qu'il en résulte les inconvénients connus.

A cet effet, selon le procédé de l'invention :
- pendant au moins un premier cycle d'usinage d'une pièce 20, dit cycle d'observation, on détecte, on mesure et on enregistre les déplacements qui sont imposés à la butée 82 du dispositif 8 de translation interne à l'installation 1 de chargement, du fait,
   . de la liaison mécanique établie par la barre 2 entre ladite butée 82 du dispositif 8 de translation interne à l'installation 1 et la poupée mobile 41 qui retient cette barre 2 dans sa pince 40 de serrage et,
   . des déplacements de ladite poupée mobile 41 commandés au cours de l'usinage par son appareil 43 de commande,
- lors d'au moins un cycle d'usinage d'une pièce 20 qui suit le cycle dit d'observation, on exploite l'enregistrement effectué pour commander le dispositif 8 de translation interne à l'installation 1 de chargement et assurer des déplacements de la butée 82 de ce dispositif 8 de translation, en synchronisme avec les déplacements de la poupée mobile 41.

Egalement selon le procédé de l'invention :
- on effectue au moins deux cycles d'observation, et
- on compare les enregistrements effectués au cours de ces cycles,
- si, au cours de cette comparaison on ne détecte pas entre les enregistrements de différence s'étendant au delà d'un seuil prédéterminé, on utilise au moins l'un desdits enregistrement pour commander le dispositif 8 de translation qui est situé dans l'installation 1 de chargement et, dans le cas contraire, c'est-à-dire si on détecte une différence s'étendant au-delà d'un seuil prédéterminé, on reprend les cycles d'observation.

L'homme du métier est à même, sans avoir à faire preuve d'invention, de déterminer et fixer le seuil au-delà duquel il y a lieu de reprendre un ou plusieurs cycles d'observation.

De manière remarquable, selon le procédé :
- on met en oeuvre un dispositif 8 de translation interne à l'installation 1 comportant un moyen 15 moteur du type doté d'un organe 151 encodeur, c'est-à-dire, d'un organe 151 encodeur qui, utilisé pour l'asservissement du moyen 15 moteur, mesure par incrément chaque déplacement d'un organe actif du moyen 15 moteur, y compris lorsque ce moyen 15 moteur reçoit un mouvement,
- pour détecter et mesurer les déplacements qui sont imposés à la butée 82 du dispositif 8 de translation interne à l'installation 1 de chargement, on exploite des informations fournies par l'organe 151 encodeur et ce sont ces informations qu'on mémorise pour ultérieurement, procéder à la comparaison des déplacements en translation sur au moins deux cycles d'usinage, puis à la commande du dispositif 8 de translation interne à l'installation 1, de manière à obtenir un synchronisme entre les déplacements de la barre 2 qui sont provoqués par ledit dispositif 8 de translation et les déplacements de la barre 2 qui sont induits par les déplacements de la poupée mobile 41.

L'installation 1 de chargement de barres 2 est remarquable en ce que le dispositif 8 de déplacement en translation qu'elle comprend permet d'assurer les étapes fonctionnelles du procédé.

Précisément, l'invention a également pour objet une installation 1 de chargement de barres 2 dans une machine d'usinage 4 remarquable par le fait qu'elle comprend un dispositif 8 de déplacement en translation, équipé d'un moyen fonctionnel 80 qui :
- pendant au moins un premier cycle d'usinage d'une pièce 20, dit cycle d'observation, détecte, mesure et enregistre les déplacements qui sont imposés à la butée 82 du dispositif 8 de translation interne à l'installation 1 de chargement, du fait,
   . de la liaison mécanique établie par la barre 2 entre ladite butée 82 du dispositif 8 de translation interne à l'installation 1 et la poupée mobile 41 qui retient cette barre 2 dans sa pince 40 de serrage et,
   . des déplacements de ladite poupée mobile 41 commandés au cours de l'usinage par son appareil 43 de commande,
- lors d'au moins un cycle d'usinage d'une pièce 20 qui suit le cycle dit d'observation, exploite l'enregistrement effectué pour commander le dispositif 8 de translation interne à l'installation 1 de chargement et assurer des déplacements de ce dispositif 8 de translation, en synchronisme avec les déplacements de la poupée mobile 41.

L'installation 1 de chargement de barres 2 est également remarquable en ce que le moyen fonctionnel 80 qui équipe le dispositif 8 de déplacement en translation qu'elle comprend :
- effectue au moins deux cycles d'observation, et
- compare les enregistrements effectués au cours de ces cycles,
- si, au cours de cette comparaison, il ne détecte pas entre les enregistrements de différence s'étendant au-delà d'un seuil prédéterminé, utilise au moins l'un desdits enregistrement pour commander le dispositif 8 de translation qui est situé dans l'installation 1 de chargement et, dans le cas contraire, c'est-à-dire s'il détecte une différence s'étendant au-delà d'un seuil prédéterminé, reprend les cycles d'observation.

L'installation 1 de chargement de barres 2 est encore remarquable en ce que le moyen fonctionnel 80 qui équipe le dispositif 8 de déplacement en translation qu'elle comprend :
- met en oeuvre un dispositif 8 de translation interne à l'installation 1 comportant un moyen 15 moteur du type doté d'un organe 151 encodeur, c'est-à-dire, d'un organe 151 encodeur qui, utilisé pour l'asservissement du moyen 15 moteur, mesure par incrément chaque déplacement d'un organe actif du moyen 15 moteur, y compris lorsque ce moyen 15 moteur reçoit un mouvement,
- pour détecter et mesurer les déplacements qui sont imposés à la butée 82 du dispositif 8 de translation interne à l'installation 1 de chargement, exploite des informations fournies par l'organe 151 encodeur et mémorise ces informations pour, ultérieurement, procéder à la comparaison des déplacements sur au moins deux cycles d'usinage, puis à la commande du dispositif 8 de translation interne à l'installation 1, de manière à obtenir un synchronisme entre les déplacements de la barre 2 qui sont provoqués par ledit dispositif 8 de translation et les déplacement de la barre 2 qui sont induits par les mouvements de la poupée mobile 41.

## Revendications

1. Procédé de commande d'un dispositif (8) de déplacement en translation équipant une installation (1) de chargement séquentiel de barres (2) dans une partie rotative tubulaire (3) d'une machine d'usinage (4) de ces barres (2), cette machine d'usinage (4) étant destinée à produire, par la répétition d'un cycle d'usinage préétabli, une pluralité de pièces (20) profilées dont la longueur correspond à une fraction de la longueur de la barre (2),
- la partie rotative tubulaire (3) de la machine d'usinage (4), d'une part, comprenant une pince (40) de serrage de la barre (2) qui la traverse et, d'autre part, faisant partie d'un ensemble (41) qui, dit poupée mobile (41), peut, notamment au cours de chaque cycle d'usinage d'une pièce (20), être déplacé en translation selon un axe (500) sensiblement parallèle à celui (400) de la partie rotative (3), et ce, d'une part, suivant deux sens opposés (421, 422), par la mise en fonction d'un moyen moteur (42) prévu sur ladite machine d'usinage (4) et commandé par un appareil (43) à cet effet et, d'autre part, cependant que la pince (40) reste fermée,
- l'installation (1) de chargement de barres (2) comprenant quant à elle au moins un dispositif (8), dit dispositif (8) de translation, destiné à assurer des fonctions de déplacement en translation d'une barre 2 de manière à pouvoir obtenir, par le biais d'au moins une butée (82) maintenue en appui contre cette barre (2), notamment, la poussée de ladite barre (2), par séquence, à travers la partie rotative tubulaire (3), jusqu'à ce qu'un nombre déterminé de pièces (20) ait été réalisé,
ce procédé étant **caractérisé en ce que** :
- pendant au moins un premier cycle d'usinage d'une pièce (20), dit cycle d'observation, on détecte, on mesure et on enregistre les déplacements qui sont imposés à la butée (82) du dispositif (8) de translation interne à l'installation (1) de chargement, du fait,
. de la liaison mécanique établie par la barre (2) entre ladite butée (82) du dispositif (8) de translation interne à l'installation (1) et la poupée mobile (41) qui retient cette barre (2) dans sa pince (40) de serrage et,
. des déplacements de ladite poupée mobile (41) commandés au cours de l'usinage par son appareil (43) de commande,
- lors d'au moins un cycle d'usinage d'une pièce (20) qui suit le cycle dit d'observation, on exploite l'enregistrement effectué pour commander le dispositif (8) de translation interne à l'installation (1) de chargement et assurer des déplacements de la butée (82) de ce dispositif (8) de translation, en synchronisme avec les déplacements de la poupée mobile (41).

2. Procédé selon la revendication 1 **caractérisé en ce que** :
- on effectue au moins deux cycles d'observation, et
- on compare les enregistrements effectués au cours de ces cycles,
- si, au cours de cette comparaison on ne détecte pas entre les enregistrements de différence s'étendant au-delà d'un seuil prédéterminé, on utilise au moins l'un desdits enregistrement pour commander le dispositif (8) de translation qui est situé dans l'installation 1 de chargement et, dans le cas contraire, c'est-à-dire si on détecte une différence s'étendant au-delà d'un seuil prédéterminé, on reprend les cycles d'observation.

3. Procédé selon la revendication 1 ou 2, **caractérisé en ce que** :
- on met en oeuvre un dispositif (8) de translation interne à l'installation 1 comportant un moyen (15) moteur du type doté d'un organe (151) encodeur, c'est-à-dire, d'un organe (151) encodeur qui, utilisé pour l'asservissement du moyen (15) moteur, mesure par incrément chaque déplacement d'un organe actif du moyen (15) moteur, y compris lorsque ce moyen (15) moteur reçoit un mouvement,
- pour détecter et mesurer les déplacements qui sont imposés à la butée (82) du dispositif (8) de translation interne à l'installation (1) de chargement, on exploite des informations fournies par l'organe (151) encodeur et ce sont ces informations qu'on mémorise pour ultérieurement, procéder à la comparaison des déplacements en translation sur au moins deux cycles d'usinage, puis à la commande du dispositif (8) de translation interne à l'installation (1), de manière à obtenir un synchronisme entre les déplacements de la barre (2) qui sont provoqués par ledit dispositif (8) de translation et les déplacement de la barre (2) qui sont induits par les déplacements de la poupée mobile (41).

4. Installation (1) de chargement de barres (2) dans une machine d'usinage (4) **caractérisé en ce qu'**elle comprend un dispositif (8) de translation, équipé d'un moyen fonctionnel (80) qui :
- pendant au moins un premier cycle d'usinage d'une pièce (20), dit cycle d'observation, détecte, mesure et enregistre les déplacements qui sont imposés à la butée (82) du dispositif (8) de translation interne à l'installation (1) de chargement, du fait,
. de la liaison mécanique établie par la barre (2) entre ladite butée (82) du dispositif (8) de translation interne à l'installation (1) et la poupée mobile (41) qui retient cette barre (2) dans sa pince (40) de serrage et,
. des déplacements de ladite poupée mobile (41) commandés au cours de l'usinage par son appareil (43) de commande,
- lors d'au moins un cycle d'usinage d'une pièce (20) qui suit le cycle dit d'observation, exploite l'enregistrement effectué pour commander le dispositif (8) de translation interne à l'installation (1) de chargement et assurer des déplacements de ce dispositif (8) de translation, en synchronisme avec les déplacements de la poupée mobile (41).

5. Installation de chargement selon la revendication 4 **caractérisée en ce que** le moyen fonctionnel (80) qui équipe le dispositif (8) de translation qu'elle comprend :
- effectue au moins deux cycles d'observation, et
- compare les enregistrements effectués au cours de ces cycles,
- si, au cours de cette comparaison, il ne détecte pas entre les enregistrements de différence s'étendant au-delà d'un seuil prédéterminé, utilise au moins l'un desdits enregistrement pour commander le dispositif (8) de translation qui est situé dans l'installation (1) de chargement et, dans le cas contraire, c'est-à-dire s'il détecte une différence s'étendant au-delà d'un seuil prédéterminé, reprend les cycles d'observation.

6. Installation de chargement selon la revendication 4 ou 5 **caractérisée en ce que** le moyen fonctionnel (80) qui équipe le dispositif (8) de translation qu'elle comprend :
- met en oeuvre un dispositif (8) de translation interne à l'installation (1) comportant un moyen (15) moteur du type doté d'un organe (151) encodeur, c'est-à-dire, d'un organe (151) encodeur qui, utilisé pour l'asservissement du moyen (15) moteur, mesure par incrément chaque déplacement d'un organe actif du moyen (15) moteur, y compris lorsque ce moyen (15) moteur reçoit un mouvement,
- pour détecter et mesurer les déplacements qui sont imposés à la butée (82) du dispositif (8) de translation interne à l'installation (1) de chargement, exploite des informations fournies par l'organe (151) encodeur et mémorise ces informations pour, ultérieurement, procéder à la comparaison des déplacements sur au moins deux cycles d'usinage, puis à la commande du dispositif (8) de translation interne à l'installation (1), de manière à obtenir un synchronisme entre les déplacements de la barre (2) qui sont provoqués par ledit dispositif (8) de translation et les déplacements de la barre (2) qui sont induits par les mouvements de la poupée mobile (41).
